# NEUE EUROPÄISCHE PATENTSCHRIFT

(11) **EP 0 845 397 B2**
(45) Veröffentlichungstag und Bekanntmachung des Hinweises auf die Entscheidung über den Einspruch: **26.03.2008**
(45) Hinweis auf die Patenterteilung: 06.03.2002
(21) Anmeldenummer: 97119849.4
(22) Anmeldetag: 13.11.1997
(51) Int. Cl.: B60T 8/36, B60T 13/68

(54) **Druckregelvorrichtung für elektropneumatische Bremsanlagen von Fahrzeugen, insbesondere Nutzfahrzeugen**
Pressure control device for electro-pneumatic vehicle braking systems, especially commercial vehicles
Régulateur de pression pour systèmes de freinage électropneumatiques pour véhicules, notamment véhicules utilitaires

(30) Priorität: 28.11.1996 DE 19649402
(43) Veröffentlichungstag der Anmeldung: 03.06.1998
(73) Patentinhaber: KNORR-BREMSE SYSTEME FÜR NUTZFAHRZEUGE GMBH, 80809 München (DE)
(72) Erfinder: Fries, Ansgar, 80993 München (DE)
(74) Vertreter: Schumacher & Willsau

(56) Entgegenhaltungen:
- EP-A- 0 110 119
- EP-A- 0 305 710
- EP-A- 0 580 382
- EP-A- 0 644 092
- DE-A- 2 556 023
- DE-A- 4 227 084
- DE-A- 4 232 586
- US-A- 3 976 335

## Beschreibung

Die Erfindung betrifft eine von einem Druckluftvorrat gespeichte Druckregelvorrichtung nach dem Gattungsbegriff des Patentanspruches 1. Eine derartige Druckregelvorrichtung ist aus der EP0644092A bekannt.

In elektropneumatischen Bremssystemen werden zur Bremsdruckregelung Aktuatoren verschiedenster Art eingesetzt. Die Aktuatoren in diesen Systemen müssen sowohl die Betriebsbrems- als auch die ABS-Funktion übernehmen. Dabei gilt es, für die Betriebsbremsfunktion sowohl langsame, feinfühlige Druckänderungen und bei Notbrems- bzw. bei ABS-Funktion schnelle Druckänderungen zu ermöglichen. Eingesetzt werden Ventile, die entweder beide Funktionen erfüllen können, oder unterschiedliche Ventile für jede Funktion separat. Es kommen unter anderem zur Anwendung Proportionalmagnetventile mit und ohne Relaisventil, mit und ohne ABS-Drucksteuerventilen, fernerhin Doppelmagnetventile zur Vorsteuerung eines Relaisventils, mit und ohne ABS-Drucksteuerventilen, als auch stromgesteuerte Vorsteuermagnetventile mit Sitzventilen, letztere für beide Funktionen.

Bei dem Versuch, feinfühlige Einstellungen des Verbraucherdruckes zu ermöglichen, sind Druckregeleinrichtungen entwickelt worden, bei welchen bei verbraucherseitiger Überwachung des Verbraucherdruckes durch einen Drucksensor Einlaß- und Auslaßventile vorgesehen sind, welche mit Vorsteuerventilen zusammenwirken, derart, daß im Verlaufe der elektrischen Ansteuerung von die Einlaß- und Auslaßventile betätigenden Elektromagneten zeitlich begrenzt eine gedrosselte Öffnung der Vorsteuerventile ermöglicht wird. Bei zunehmender Erregung der Betätigungsmagnete werden die Vorsteuerventile geschlossen und die eigentlichen Hauptventile großquerschnittig geöffnet. Die erwünschte feinfühlige Einspeisung des Verbraucherdruckes ist bei derartigen Regeleinrichtungen durch eine Vielzahl von Parametern bestimmt; es sind überdies Zwischen- bzw. Schwimmstellungen der Hauptventile gegeben, welche in Abhängigkeit des Erregerstroms definiert sein müssen. Der bauliche Aufwand derartiger Druckregelvorrichtungen ist demnach beträchtlich, zudem ist Funktionsgenauigkeit bei unterschiedlichen Temperatur- und Druckverhältnissen gefordert.

Als nachteilig bei der Druckregelvorrichtung der EP0644092A ist die Komplexität anzusehen.

Davon ausgehend besteht die Aufgabe der Erfindung darin, eine Druckregelvorrichtung der gattungsgemäßen Art mit einfachen Mitteln so auszugestalten, daß sie sowohl Betriebsbrems- als auch ABS-Funktionen erfüllen kann und insbesondere geeignet ist, sowohl feinfühlige Druckänderungen bei Betriebsbremsungen zu vermitteln als auch schnelle Druckänderungen zu ermöglichen, wenn Notbrems- bzw. ABS-Funktionen dies erfordern. Auch soll durch den Aufbau derartiger Druckregelvorrichtungen die Verwendung von Vorsteuereinheiten entbehrlich sein.

Zur Lösung dieser Aufgabe dienen die Merkmale nach dem Kennzeichnungsteil des Patentanspruches 1 in Verbindung mit den Merkmalen des Oberbegriffes des Patent-anspruchs 1.

Durch die sensorabhängige Ansteuerung der Elektromagnete von Einlaß- und Auslaßventil und infolge der exakt definierten Konturierung der Ventilkolben von Einlaß- und Auslaßventil an ihrem anströmseitigen Ende ist es hubabhängig möglich, jede gezielte Druck- und Volumenänderung für den Verbraucher zu erreichen, d.h. daß durch die hubabhängige Änderung des verfügbaren Querschnitts zwischen Einlaßende des Ventilkolbens und Innenquerschnitt des den Ventilkolben unmittelbar aufnehmenden Gehäuses die Möglichkeiten eines an die jeweilige Bremssituation angepaßten Druckverlaufes gegeben sind. Der Luftstrom ist also gezielt durch einen über den Kolbenhub des Einlaß- und/oder Auslaßventils veränderbaren Strömungsquerschnitt dosierbar. Hierdurch ist es möglich, daß:
bei Notbremsung der volle Querschnitt und damit ein schneller Druckanstieg ermöglicht wird;
bei einer ABS-Regelung ebenfalls mit den großen Querschnitten gearbeitet werden kann;
bei feinfühligen Bremsvorgängen und langsamen Änderungen kleine Strömungsquerschnitte und damit langsame Druckänderungen ermöglicht werden;
der dynamische Verlauf des Bremssignals, z.B. schneller Druckanstieg bis auf ca. 90 % des Bremsdruckes und danach langsamer Druckanstieg, allein durch die Änderung des Strömungsquerschnittes realisierbar ist; und daß
das sogenannte Radmodul der Bremsanlage den Druckgradienten zur Be- und Entlüftung erlernt, da die nachgeschalteten Volumina aus Bremsschlauch und Bremszylinder nach der Installation konstant bleiben, so daß entsprechend der Höhe und vor allem der Zeitabhängigkeit des Bremssignals ein optimales Regeln ermöglicht ist.

Was die baulichen Kriterien einer derartigen Druckregelvorrichtung betrifft, so sind gleichfalls wesentliche Vorteile erzielbar, d.h. sowohl die Betriebsbremsfunktion als auch die ABS-Funktion können mit einem Modul realisiert werden, fernerhin besteht Luftverbrauch wie bei derzeitigen Bremssystemen, d.h. kein erhöhter Luftverbrauch durch taktende Ventile. Es sind auch keine Geräusche hinzunehmen, wie sie bei Taktventilen oder pulsierenden Ventilen nachteilig auftreten. Es ist auch von Vorteil, daß die Einrichtung durch ihre Stromregelung im wesentlichen temperaturunabhängig arbeitet.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Fig. 1 ist eine schematische Ansicht der Druckregelvorrichtung nach der Erfindung;
Fig. 2 gibt vergrößerte Schnittansichten dreier verschiedener Konturen, gebildet zwischen dem Einlaßende des Ventilkolbens und dem Innenquerschnitt des das Ventilende aufnehmenden Gehäuses, wieder;
Fig. 3 gibt die mittels der Konturen A,B und C nach Figur 2 erzielbaren Strömungsquerschnitte Q1-Q3 gegenüber dem Hub S wieder, wobei mit Sr der Regelbereich des verfügbaren Hubes dargestellt ist; und
Fig. 4 ist eine der Fig. 1 vergleichbare schematische Ansicht einer Druckregelvorrichtung nach einer weiteren Ausführungsform der Erfindung, unter Verwendung eines pneumatisch-redundanten Systems.

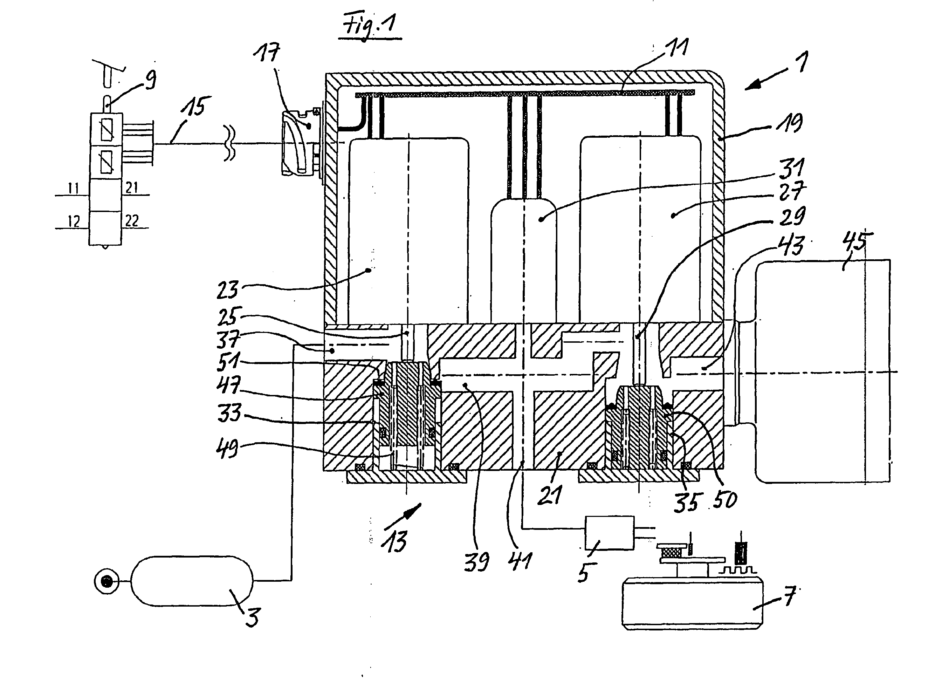

In Fig. 1 der Zeichnung ist eine erste Ausführungsform einer elektropneumatischen Bremsanlage unter Verwendung der erfindungsgemäßen Druckregelvorrichtung 1 dargestellt. Die Druckregelvorrichtung 1 befindet sich in dargestellter Weise in Zuschaltung zu einem Druckluftvorrat 3, einem Bremszylinder 5 für ein schematisch wiedergegebenes Rad 7 des Fahrzeuges und einem elektropneumatischen Bremswertgeber 9 in Form eines Fußbremsventils. Die Druckregelvorrichtung 1 besteht aus zwei funktionellen Einheiten, einer schematisch wiedergegebenen, elektronischen Steuereinheit 11 und einer Ventileinrichtung 13, welche in nachfolgend erläuterter Weise mittels der elektronischen Steuereinheit gesteuert wird, um die Verbindung zwischen der Druckmittelquelle, also dem Druckluftvorrat 3, und dem Verbraucher, d.h. dem Bremszylinder 5, als auch die Verbindung zwischen dem Bremszylinder 5 und der Druckentlastung, d.h. im dargestellten Ausführungsbeispiel mit der Außenluft, zu steuern.

Der elektropneumatische Bremswertgeber 9 ist mit seinem elektrischen Teil über eine Steuerleitung 15 und einen Stecker 17 an die elektronische Steuereinheit 11 angeschlossen. Die elektronische Steuereinheit 11 befindet sich innerhalb eines Gehäuses 19, welches mit dem in der Zeichnung darunter befindlichen Gehäuse 21 der Ventileinrichtung 13 verbunden ist; im Gehäuse 19 der elektronischen Steuereinheit befinden sich ein Elektromagnet 23 mit einem von seinem Anker gebildeten Betätigungsstößel 25, ein weiterer Elektromagnet 27 mit einem Betätigungsstößel 29 und ein an die elektronische Steuereinheit 11 angeschlossener Drucksensor 31. Die beiden Elektromagneten 23 und 27 sind gleichfalls mit der elektronischen Steuereinheit 11 verbunden und werden nach Maßgabe der Betätigung des Bremswertgebers 9 und der vom Drucksensor umgesetzten, in die elektronische Steuereinheit 11 eingehenden Meßgrößen geregelt. Im unterhalb des Gehäuses 19 befindlichen Gehäuse 21 ist die Ventileinrichtung 13 mit einem Einlaßventil 33 und einem Auslaßventil 35 versehen. Das Einlaßventil überwacht die Verbindung zwischen einem Einlaß 37 und einer Druckmittelkammer 39, welche über einen Auslaß 41 an den Verbraucher, d.h. an den Bremszylinder 5 angeschlossen ist. Das Auslaßventil 35 überwacht die Verbindung zwischen dem Verbraucher 5 und einem weiteren Auslaß 43, welcher an die Atmosphäre angeschlossen ist, also die eigentliche Entlastungseinrichtung bildet. Im dargestellten Ausführungsbeispiel ist der Auslaß 43 mittels eines Schalldämpfers 45 mit der Außenluft in Verbindung. In der Darstellung nach Fig. 1 sind die beiden Ventile in ihrer Ausgangslage wiedergegeben, d.h. das Einlaßventil 33 sperrt die Verbindung zwischen dem Druckluftvorrat 3 und dem Verbraucher, während das Auslaßventil die Verbindung in Richtung Entlüftung freigibt, d.h. die Bremsen des Fahrzeuges sind entlüftet. Die beiden Elektromagneten sind stromlos, wobei die eingezogene Lage des Betätigungsstößels 25 und die ausgefahrene Lage des Betätigungsstößels 29 z.B. unter Federwirkung herbeigeführt sind.

Das Einlaßventil 33 ist mit einem Ventilkolben 47 versehen, welcher gegen die Kraft einer Feder 49 betätigbar ist und in herkömmlicher Weise Mittel zur Druckentlastung aufweist, d.h. im dargestellten Ausführungsbeispiel Bohrungen, welche sich durch den Ventilkolben erstrecken, derart, daß zu beiden Stirnseiten des Ventilkolbens Druckentlastung besteht.

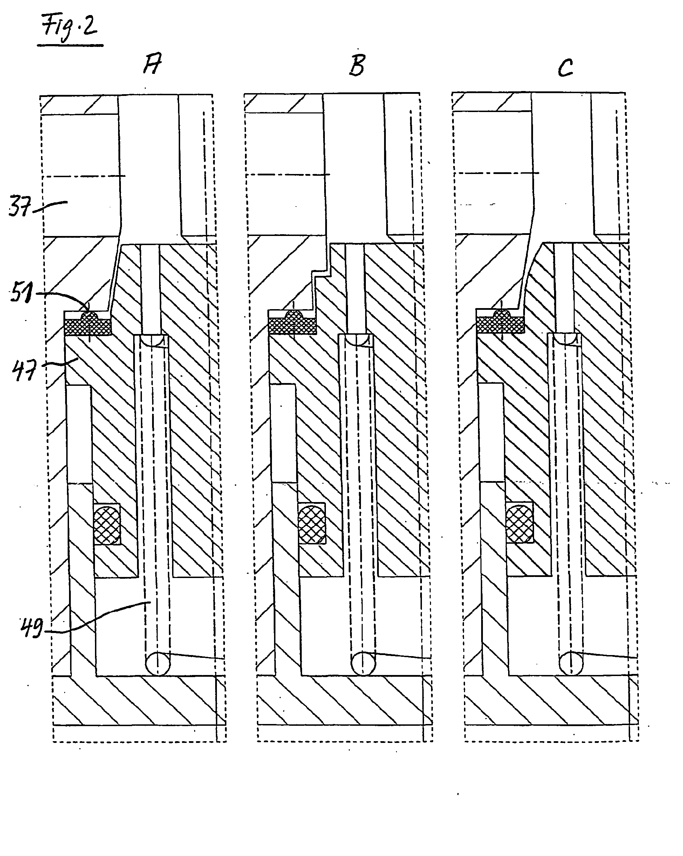

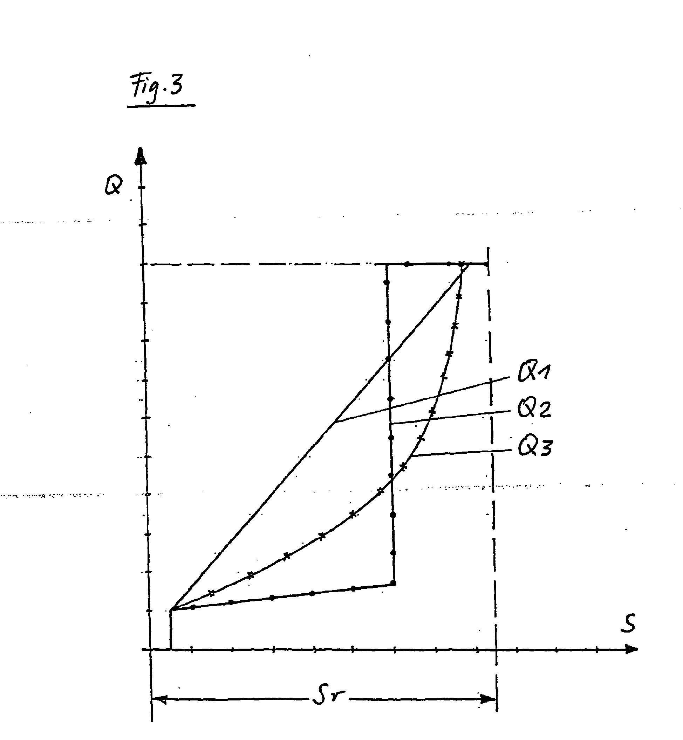

In erfindungsgemäßer Weise ist der Ventilkolben 47 in seinem unmittelbaren Einlaßbereich, d.h. an seinem dem Vorratsdruck zugewandtem Ende mit einer besonderen Konturgestaltung versehen, welche es erlaubt, den Luftstrom gezielt durch einen über dem Kolbenhub veränderbaren Strömungsquerschnitt zu dosieren. Der besondere Formgebung am Einlaßende des Ventilkolben 47 ist eine Konturierung am Einlaßquerschnitt des Ventilgehäuses angepaßt, so daß zwischen Ventilgehäuse-Innenumfang und Außenumfang des Ventilkolbens 47 die vorgenannte gezielte Luftdosierung nach Maßgabe des Hubs ermöglicht ist. In Fig. 2 der Zeichnung sind verschiedene Konturen am Einlaßende des Ventilkolbens 47 in Zuordnung zur speziell gestalteten Konturierung des Ventilgehäuses wiedergegeben. Fig. 3 der Zeichnung veranschaulicht die nach Maßgabe der in Fig. 2 dargestellten Konturierungen ermöglichten Strömungsquerschnitte in Abhängigkeit vom Hub des vom Betätigungsstößel 25 verschiebbaren Ventilkolbens. Die Strömungsquerschnitte Q1, Q2 und Q3 nach Fig. 3 sind den Konturen A,B und C nach Fig. 2 zugeordnet. Es ist erkennbar, daß die Kontur A zu einer linear verlaufenden Veränderung des Strömungsquerschnittes führt, während die Kontur B hubabhängig eine vollständige Öffnung des Querschnitts nach vorangehender linearer Querschnittsvergrößerung auslöst. Bei der Kontur C ist das Profil zwischen Ventilkolben 47 und Ventilgehäuse von unterschiedlicher Art, d.h. dem bogenförmigen Verlauf am Einlaßende des Ventilstößels entspricht der in Fig. 3 wiedergegebene bogenförmige Verlauf des Strömungsquerschnitts, welcher zwischen Ventilgehäuse und Einlaßende des Ventilkolbens gebildet ist.

Die vorstehenden Erläuterungen zu den Querschnittsänderungen am Ventilkolben 47 des Einlaßventils 33 sind in gleicher Weise für die Konturierung und die sich daraus ableitenden Querschnittsänderungen am Ventilkolben 50 des Auslaßventils 35 gültig.
Auch die Betätigung des Auslaßventils durch den Elektromagneten 27 kann nach Maßgabe der ermittelten Druckwerte und einer den Öffnungsquerschnitt vorgebenden Kontur gemäß Fig. 2 erfolgen, d.h. es ist in gleicher Weise sowohl feinfühliges als auch ein großvolumiges, schnelles Entlüften des Verbrauchers möglich.

Die Funktionsweise der vorstehend erläuterten Druckregelvorrichtung ist wie folgt:
Bei einer Bremsung wird ein vom Bremswertgeber 9 vorgegebenes Soll-Bremssignal über den Stecker 17 der elektronischen Steuereinheit 11 zugeführt. Die elektronische Steuereinheit schließt über den Elektromagneten 27 und dessen Betätigungsstößel 29 das Auslaßventil 35 (Fig. 1) und aktiviert vermittels des Elektromagneten 23 das Einlaßventil 33. Überschreitet die Magnetkraft des Elektromagneten 23 die Federkraft der Feder 49 und die am Ventilkolben anliegenden Reibkräfte, so setzt sich der Ventilkolben in Bewegung und öffnet den gegenüber dem Gehäuse bestehenden Ventilsitz 51, so daß die Vorratsluft des Druckluftvorrats 3 durch den Einlaß 37 und das geöffnete Einlaßventil in die Druckmittelkammer 39 und von dort zum Verbraucher gelangt. Gleichzeitig wird der sich in der Druckmittelkammer 39 aufbauende Druck kontinuierlich vom Drucksensor 31 gemessen, der diesen Druckwert an die eingebaute elektronische Steuereinheit 11 leitet. Die elektronische Steuereinheit vergleicht das vorgegebene Bremssignal mit dem Istwert des Bremsdruckes und regelt das Einlaßventil 33, bis dieses wieder schließt. Der Bremsdruck bleibt nun konstant, da sich das Auslaßventil 35 in geschlossener Lage befindet. Soll der Bremsdruck abgebaut werden, so geschieht dies in analoger Weise über das Auslaßventil 35 und den Auslaß 43, welcher zur Atmosphäre führt. Mit Hilfe der vorstehend erläuterten querschnittsänderlichen Charakteristik des Einlaßventils sind sowohl volle Querschnitte bei schnellem Druckanstieg, wie für Notbremsungen erforderlich, aber auch kleine Strömungsquerschnitte und damit langsame Druckänderungen, wie bei feinfühligen Bremsvorgängen erforderlich, ermöglicht. Es ist demnach ein dynamischer Verlauf des Bremssignals, z.B. ein schneller Druckanstieg bis auf ca. 90 % des erzielbaren Bremsdruckes, und anschließend ein langsamer Druckanstieg, allein durch die Änderung des Strömungsquerschnittes, erzielbar.

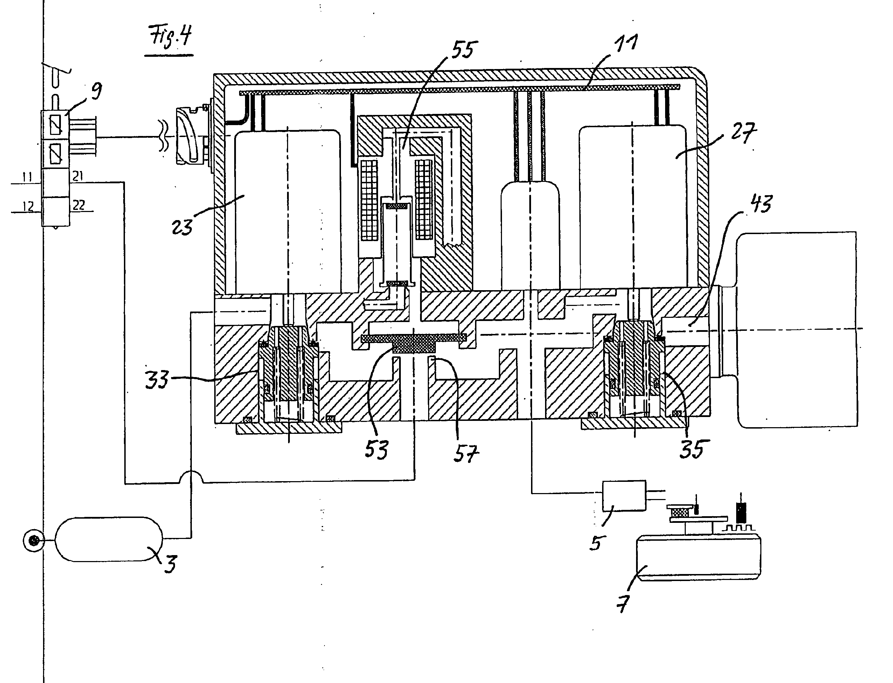

In Fig. 4 ist eine Druckregelvorrichtung gemäß einer weiteren Ausführungsform der Erfindung wiedergegeben. Die Druckregelvorrichtung ist hierbei mit einem zusätzlichen Bremsdruckrückhalteventil 53 versehen; dieses wirkt mit einem Ein- und Auslaßventil 55 zusammen, an welches der Druckluftvorrat 3 angeschlossen ist. Bei elektrischer Ansteuerung über den Bremswertgeber 9 und Betätigung des Einlaßventils 33 wird gleichzeitig das Ein- und Auslaßventil 55 geöffnet, derart, daß durch den vom Druckluftvorrat 3 anstehenden Vorratsdruck das Bremsdruckrückhalteventil 53 in geschlossener Lage am gehäuseseitigen Ventilsitz 57 gehalten ist. Bei geöffnetem Einlaßventil 33 erfolgt die Druckbeaufschlagung des Verbrauchers, d.h. des Bremszylinders 5 in der unter Bezugnahme auf Fig. 1 erläuterten Weise. Für den Druckabbau bei geschlossenem Einlaßventil wird das Auslaßventil 35 mittels des Elektromagneten 27 betätigt, d.h. der Ventilkolben desselben wird in die geöffnete Lage nach unten gerichtet (Fig. 4) verschoben, derart, daß die Verbindung zwischen dem Verbraucher und der Entlastungseinrichtung besteht. Bei einer Abschaltung bzw. bei Ausfall der Regelung durch die Steuereinheit 11 und Betätigung des Bremswertgebers 9 wird der vom pneumatischen Geberteil desselben stammende Bremsdruck bei sich öffnendem Bremsdruckrückhalteventil 53 in Richtung des Verbrauchers durchgesteuert, und zwar im Verhältnis 1:1. Das Bremsdruckrückhalteventil 53 nimmt in diesem Fall die geöffnete Lage ein, da der über das Ein- und Auslaßventil 55 vom Druckluftvorrat 3 anstehende Druck bei Abschaltung des elektropneumatischen Regelkreises abgesperrt und das Bremsdruckrückhalteventil über das geöffnete Ein- und Auslaßventil 55 gemäß Darstellung in Fig. 4 entlüftet wird. Die Sicherstellung, daß ein Bremsdruck beim Fahren nicht aufgebaut werden kann, erfolgt bei der Ausführungsform nach Fig. 4 über das Bremsdruckrückhalteventil und den pneumatischen Teil des Bremswertgebers 9 in Form des Fußbremsventils, d.h. die Entlüftung des Verbrauchers ist im Fahrzustand des Fahrzeuges immer über den pneumatischen Geberteil des Bremswertgebers bzw. dessen Entlüftungsanschluß sichergestellt. Aus diesem Grunde können Einlaßventil 33 und Auslaßventil 35 im Gegensatz zur Ausführungsform nach Fig. 1 identisch gestaltet werden.

### Bezugszeichenliste

- 1: Druckregelvorrichtung
- 3: Druckluftvorrat
- 5: Bremszylinder
- 7: Rad
- 9: elektropneumatischer Bremswertgeber
- 11: elektronische Steuereinheit
- 13: Ventileinrichtung
- 15: Steuerleitung
- 17: Stecker
- 19: Gehäuse
- 21: Gehäuse
- 23: Elektromagnet
- 25: Betätigungsstößel
- 27: Elektromagnet
- 29: Betätigungsstößel
- 31: Drucksensor
- 33: Einlaßventil
- 35: Auslaßventil
- 37: Einlaß
- 39: Druckmittelkammer
- 41: Auslaß
- 43: Auslaß
- 45: Schalldämpfer
- 47: Ventilkolben
- 49: Feder
- 50: Ventilkolben
- 51: Ventilsitz
- 53: Bremsdruckrückhalteventil
- 55: Ein- und Auslaßventil
- 57: Ventilsitz

## Patentansprüche

1. Von einem Druckluftvorrat gespeiste Druckregelvorrichtung zur Verwendung in elektropneumatischen Bremsanlagen von Fahrzeugen, mit durch Elektromagnete (23; 27) betätigbaren Ein- und Auslassventilen (33; 35) für die gesteuerte Be- und Entlüftung der pneumatischen Verbraucher der Bremsanlage, wobei eine von dem Einlassventil (33) gesteuert gespeiste, mit den Verbrauchern in Verbindung stehende Druckmittelkammer (39) der Druckregelvorrichtung hinsichtlich des mittels des Einlassventils (33) eingesteuerten bzw. des mittels des Auslassventils (35) abzubauenden Drucks unter kontinuierlicher Überwachung eines Drucksensors (31) steht, welcher die ermittelten Druckwerte an eine elektronische Steuereinheit (11) zur Betätigung der Elektromagneten (23; 27) des Einlassventils (33) bzw. Auslassventils (35) weiterleitet, wobei das zwischen dem Druckluftvorrat (3) und den Verbrauchern der Bremsanlage geschaltete Einlassventil (33) und/oder das zwischen den Verbrauchern und der Druckentlastung geschaltete Auslassventil (35) jeweils einen gegenüber einem Ventilsitz (51) schließbaren Ventilkolben (47; 50) aufweist, **dadurch gekennzeichnet, dass** ein jeweiliger druckentlasteter Ventilkolben (47; 50) des jeweiligen Ventils (33; 35) von einem durch einen Anker des jeweiligen Elektromagneten (23; 27) gebildeten Betätigungsstößel zum Betätigen des jeweiligen Ventils (33; 35) verschiebbar ist, dass der Ventilkolben (47; 50) mit einer solchen Kontur des Außenumfanges versehen ist, dass sich die radiale, den Strömungsquerschnitt definierende minimale Querschnittsfläche zwischen dem Ventilkolben und dem ihn umgebenden Ventilgehäuse in Abhängigkeit vom Ventilkolbenhub verändert und dass der Ventilkolben (47; 50) rotationssymmetrisch ausgebildet ist.

2. Druckregelvorrichtung nach Anspruch 1, **gekennzeichnet durch** folgende-Merkmale:
a) das bezüglich des Druckluftvorrates (3) anströmseitige Ende des Ventilkolbens (47; 50) ist strömungsaufwärts seines gehäuseseitigen Ventilssitzes (51) konisch zulaufend ausgebildet; und
b) der Einlaß des das anströmseitige Ende des Ventilkolbens (47; 50) aufnehmenden Gehäuses ist mit einer der Kontur des Ventilkolbens entsprechenden Konturierung versehen.

3. Druckregelvorrichtung nach Anspruch 1, **gekennzeichnet durch** folgende Merkmale:
a) das anströmseitige Ende des Ventilkolbens (47; 50) ist stufenweise abgesetzt; und
b) der Einlaß des das anströmseitige Ende des Ventilkolbens (47; 50) aufnehmenden Gehäuses (21) des Ventils ist gleichfalls stufenweise abgesetzt ausgebildet.

4. Druckregelvorrichtung nach Anspruch 1 **gekennzeichnet durch** folgende Merkmale:
a) das anströmseitige Ende des Ventilkolbens (47; 50) ist mit einer bogenförmig sich verjüngenden Konturierung versehen; und
b) der Einlaß des das anströmseitige Ende des Ventilkolbens aufnehmenden Gehäuses (21) des Ventils ist mit einer von der Konturierung des Ventilkolbens (47; 50) abweichenden Kontur versehen, derart, daß zwischen Einlaßende des Ventilkolbens (47; 50) und Gehäuseeinlaß hubabhängig unterschiedliche Öffnungsquerschnitte bestehen.

5. Druckregelvorrichtung nach einem der vorangehenden Ansprüche, **dadurch gekennzeichnet, daß** das Einlaßventil (33) und das Auslaßventil (35) gleiche Konturierung des Ventilkolbens zur Erzielung gleicher Einlaßquerschnitte aufweisen.

6. Druckregelvorrichtung nach einem der Ansprüche 1 bis 4, **dadurch gekennzeichnet, daß** das Einlaßventil (33) und das Auslaßventil (35) unterschiedliche Konturierung zur Erzielung unterschiedlicher Einlaßquerschnitte aufweisen.

7. Druckregelvorrichtung nach einem der vorangehenden Ansprüche, **gekennzeichnet durch** folgende Merkmale:
a) die Druckregelvorrichtung weist ein bei elektrischer Ansteuerung der Elektromagnete (23; 27) der Einlaß- und Auslaßventile (33; 35) in Sperrlage gehaltenes Bremsdruckrückhalteventil (53) auf, welches an den pneumatischen Steuerteil eines Bremswertgebers (9) der Bremsanlage angeschlossen ist; und
b) das Bremsdruckrückhalteventil (53) befindet sich in der Verbindung zwischen dem Bremswertgeber (9) und den Verbrauchern der Bremsanlage, derart, daß bei Ausfall der elektrischen Ansteuerung und Einsetzen der Bremswertgeber-Betätigung eine pneumatische Durchsteuerung vom pneumatischen Steuerteil des Bremswertgebers zu den Verbrauchern erfolgt.

8. Druckregelvorrichtung nach Anspruch 7, **dadurch gekennzeichnet, daß** die Entlüftungsverbindung der Verbraucher der Bremsanlage bei geöffnetem Bremsdruckrückhalteventil (53) über den pneumatischen Steuerteil des Bremswertgebers (9) bzw. dessen Druckentlastung besteht.

## Claims

1. Pressure-regulating device fed from a compressed air reservoir for use in electro-pneumatic brake installations in vehicles, having inlet and outlet valves (33; 35) which can be actuated by electromagnets (23; 27) for the controlled ventilation and pressure release of the pneumatic consumers of the brake installation, wherein a pressure medium chamber (39) of the pressure-regulating device, fed in a controlled manner from the inlet valve (33) and connected to the consumers, is under continuous monitoring by a pressure sensor (31) as regards the pressure controlled by means of the inlet valve (33) or the pressure to be reduced by means of the outlet valve (35), this pressure sensor forwarding the determined pressure values to an electronic control unit (11) to actuate the electromagnets (23; 27) of the inlet valve (33) or the outlet valve (35), and wherein the inlet valve (33) connected between the compressed air reservoir (3) and the consumers of the brake installation, and/or the outlet valve (35) connected between the consumers and the pressure release unit, each have a valve piston (47; 50) which can be closed with respect to a valve seat (51), **characterised in that** a respective pressure-released valve piston (47; 50) of the respective valve (33; 35) is displaceable by an actuation tappet formed by an armature of the respective electromagnet (23; 27), for actuating the respective valve (33; 35), **in that** the valve piston (47; 50) is provided with an outer circumference contour such that the radial minimum cross-sectional surface defining the flow cross-section between the valve piston and the housing surrounding it changes in dependence on the valve piston stroke, and **in that** the valve piston (47; 50) is designed rotationally symmetric.

2. Pressure-regulating device according to claim 1, **characterised by** the following features:
a) the end of the valve piston (47; 50) in the flow-path from the compressed air reservoir (3) is of conically tapering construction upstream of its housing-side valve seat (51); and
b) the inlet of the housing receiving the flow-path end of the valve piston (47; 50) is provided with a contour corresponding to the contour of the valve piston.

3. Pressure-regulating device according to claim 1, **characterised by** the following features:
a) the flow-path end of the valve piston (47; 50) is recessed in steps; and
b) the inlet of the housing (21) of the valve receiving the flow-path end of the valve piston (47; 50) is also of recessed step construction.

4. Pressure-regulating device according to claim 1, **characterised by** the following features:
a) the flow-path end of the valve piston (47; 50) is provided with a curved tapering contour; and
b) the inlet of the housing (21) of the valve receiving the flow-path end of the valve piston is provided with a contour which differs from the contour of the valve piston (47; 50) in such a way that there are different aperture cross-sections between the inlet end of the valve piston (47; 50) and the housing inlet depending on the stroke.

5. Pressure-regulating device according to one of the preceding claims, **characterised in that** the inlet valve (33) and the outlet valve (35) have the same contour of the valve piston to obtain similar inlet cross-sections.

6. Pressure-regulating device according to one of claims 1 to 6, **characterised in that** the inlet valve (33) and the outlet valve (35) have different contours to obtain different inlet cross-sections.

7. Pressure-regulating device according to one of the preceding claims, **characterised by** the following features:
a) the pressure-regulating device has a brake pressure retaining valve (53) which is kept in the stop position when the electromagnets (23; 27) of the inlet and outlet valves (33; 35) are controlled electrically, this brake pressure retaining valve being connected to the pneumatic control part of a brake signal source (9) of the brake installation; and
b) the brake pressure retaining valve (53) is located at the junction between the brake signal source (9) and the consumers of the brake installation, in such a way that when the electrical control fails, and actuation of the brake signal source is initiated, there is pneumatic control from the pneumatic control part of the brake signal source to the consumers.

8. Pressure-regulating device according to claim 7, **characterised in that** when the brake pressure retaining valve (53) is open, the ventilation connection of the consumers of the brake installation is afforded via the pneumatic control part of the brake signal source (9) or its pressure-release unit.

## Revendications

1. Dispositif régulateur de pression alimenté par une réserve d'air comprimé, destiné à être utilisé dans des installations électro-pneumatiques de freinage de véhicules, dispositif comportant des soupapes d'admission et d'échappement (33; 35), actionnables à l'aide d'électroaimants (23; 27), pour l'admission et l'évacuation réglées d'air dans et hors des composants pneumatiques consommateurs de l'installation de freinage, une chambre d'agent de pression (39) du dispositif régulateur de pression, qui est alimentée sous régulation par la soupape d'admission (33) et qui est mise en communication avec les composants consommateurs, se trouvant alors sous la surveillance continue d'un capteur de pression (31) relativement à la pression établie sous régulation au moyen de la soupape d'admission (33) ou à la pression à supprimer au moyen de la soupape d'échappement (35), lequel capteur de pression transmet les valeurs de pression déterminées à une unité de commande électronique (11) pour l'actionnement des électroaimants (23; 27) de la soupape d'admission (33), respectivement de la soupape d'échappement (35), tandis que la soupape d'admission (33), intercalée entre la réserve d'air comprimé (3) et les composants consommateurs de l'installation de freinage, et/ou la soupape d'échappement (35), intercalée entre les composants consommateurs et l'espace de relâchement de la pression, présentent chacune un piston de soupape (47; 50) pouvant être placé en position de fermeture vis-à-vis d'un siège de soupape (51), **caractérisé en ce qu'**un piston de soupape (47; 50) respectif de la soupape (33; 35) respective, qui est déchargé de pression, est déplaçable par un poussoir d'actionnement formé par un induit de l'électroaimant respectif (23; 27) pour actionner la soupape respective (33; 35), que le piston de soupape (47; 50) est pourvu d'un contour de sa surface périphérique extérieure tel que la section transversale minimale radiale entre le piston de soupape et le corps de logement qui l'entoure, section définissant la section transversale d'écoulement, se modifie en fonction de la course du piston de soupape et que le piston de soupape (47; 50) est formé à symétrie rotationnelle.

2. Dispositif régulateur de pression selon la revendication 1, **caractérisé par** les caractéristiques suivantes:
a) l'extrémité du piston de soupape (47; 50), située du côté de l'afflux par rapport à la réserve d'air comprime (3), est, en amont de son siège de soupape (51) situé côté corps de logement, dotée d'une configuration s'effilant sous une forme conique; et
b) l'orifice d'admission du corps de logement recevant l'extrémité, situé du coté de l'afflux, du corps de soupape (47; 50) est pourvu d'un profil correspondant au contour du piston de soupape.

3. Dispositif régulateur de pression selon la revendication 1, **caractérisé par** les caractéristiques suivantes:
a) l'extrémité du piston de soupape (47; 50), située du coté de l'afflux, est étagée en gradin; et
b) l'orifice d'admission du corps de logement (21) de la soupape, recevant l'extrémité du piston de soupape (47; 50) située du côté de l'afflux, est pareillement doté d'une configuration étagée en gradin.

4. Dispositif régulateur de pression selon la revendication 1, **caractérisé par** les caractéristiques suivantes:
a) l'extrémité du piston de soupape (47; 50), située du côté de l'afflux, est pourvue d'un profil de contour se rétrécissant sous la forme d'un arc; et
b) l'orifice d'admission du corps de logement (21) de la soupape, recevant l'extrémité du piston de soupape située du côte de l'afflux, est pourvu d'un contour s'écartant du profil de contour du piston de soupape (47; 50), de telle manière qu'entre l'extrémité d'admission du piston de soupape (47; 50) et l'orifice d'admission du corps de logement, il existe des sections transversales d'ouverture différentes en fonction de la course.

5. Dispositif régulateur de pression selon l'une des revendications précédentes, **caractérisé en ce que** la soupape d'admission (33) et la soupape d'échappement (35) présentent un profil de contour identique du piston de soupape, pour l'obtention de sections transversales d'admission identiques.

6. Dispositif régulateur de pression selon l'une des revendications 1 à 4, **caractérisé en ce que** la soupape d'admission (33) et la soupape d'échappement (35) présentent un profil de contour différent, pour l'obtention de sections transversales d'admission différentes.

7. Dispositif régulateur de pression selon l'une des revendications précédentes, **caractérisé par** les caractéristiques suivantes:
a) le dispositif régulateur de pression comporte une soupape (53) de retenue de la pression de freinage, qui est maintenue en position d'arrêt lors de l'excitation électrique des électroaimants (23; 27) des soupapes d'admission et d'échappement (33; 35) et qui est raccordée à la partie pneumatique de commande d'un transmetteur de valeurs de puissance de freinage (9) de l'installation de freinage; et
b) la soupape (53) de retenue de la pression de freinage se trouve dans la communication entre le transmetteur de valeurs de puissance de freinage (9) et les composants consommateurs de l'installation de freinage, de telle sorte qu'en cas de défaillance de l'excitation électrique et de mise en oeuvre de l'actionnement par le transmetteur de valeurs de puissance de freinage, une distribution pneumatique directe ait lieu de la partie pneumatique de commande du transmetteur de valeurs de puissance de freinage jusqu'aux composants consommateurs.

8. Dispositif régulateur de pression selon la revendication 7, **caractérisé en ce que** la liaison de purge d'air des composants consommateurs de l'installation de freinage, lorsque la soupape (53) de retenue de pression de freinage est ouverte, s'établit au travers de la partie pneumatique de commande du transmetteur de valeurs de puissance de freinage (9) ou de son espace de relâchement de pression.
